# DEMANDE DE BREVET EUROPEEN

(11) **EP 4 064 063 A1**
(43) Date de publication de la demande: **28.09.2022**
(21) Numéro de dépôt: 22163885.1
(22) Date de dépôt: 23.03.2022
(51) Int. Cl.: G06F 15/173

(54) **SYSTÈME DE COMMUNICATION COMPRENANT UNE PLURALITÉ DE PROCESSEURS ET AU MOINS UN COMMUTATEUR, ET UN PROCÉDÉ DE COMMUNICATION ASSOCIÉ**

(30) Priorité: 24.03.2021 FR 2102957
(71) Demandeur: THALES, 92400 Courbevoie (FR)
(72) Inventeur: RENARD, Benoit, 33700 MERIGNAC (FR); QUIJADA, Olivier, 33700 MÉRIGNAC (FR)
(74) Mandataire: Lavoix

(57) **Abrégé**

La présente invention concerne un système de communication (10) comprenant une pluralité de processeurs (12-1, ..., 12-N) et au moins un commutateur (14-1, ..., 14-M), dit commutateur principal, raccordant les processeurs (12-1, ..., 12-N) en un réseau de communication principal ;
le système (10) étant caractérisé en ce qu'il comprend en outre au moins un autre commutateur (20), dit commutateur auxiliaire, raccordant les processeurs (12-1, ..., 12-N) en un réseau de communication auxiliaire, et en ce que le réseau de communication auxiliaire est destiné à être utilisé par les processeurs (12-1, ..., 12-N) pour initialiser le réseau de communication principal

## Description

La présente invention concerne un système de communication comprenant une pluralité de processeurs et au moins un commutateur.

La présente invention concerne également un procédé de communication associé à un tel système de communication.

L'invention trouve son application notamment dans les domaines de communication de l'électronique embarquée à forte puissance de calcul.

Comme cela est connu en soi, dans ces domaines, les bus de communication sont des points clés pour la réalisation des fonctions dédiées. Pour cela, ces domaines de communication utilisent souvent des bus de communication rapides mettant en œuvre des commutateurs de type PCIe, connus également sous le nom de PCI Express (de l'anglais « *Peripheral Component Interconnect Express* »)*.*

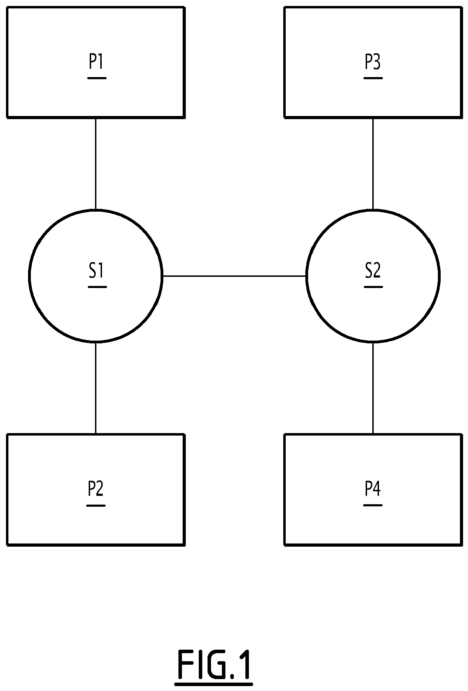

Un exemple d'un réseau de communication mis en œuvre par ce type de commutateur est illustré sur la figure 1. Ainsi, sur cette figure, les processeurs P1 à P4 sont connectés entre eux dans un réseau de communication par deux commutateurs S1 et S2. Les commutateurs S1 et S2 sont interconnectés entre eux et chacun des processeurs P1 à P4 est connecté à l'un de ces commutateurs S1 et S2.

Le type de communication entre les processeurs du réseau tel qu'illustré sur la figure 1 est basé sur des échanges mémoire avec des translations d'adresse et des signalements distants. Cette technologie est typiquement utilisée pour mettre en place la distribution de données nécessaires pour les systèmes de type NUMA (de l'anglais « *non uniform memory access* » ou « accès mémoire non uniforme » en français). Ainsi, pour pouvoir communiquer d'un processeur à un autre, il est nécessaire de mettre en place plusieurs domaines d'adressage et de translations.

Plusieurs problématiques apparaissent toutefois lors de la mise en place d'un tel type de communication.

Tout d'abord, il est impossible de connaitre l'état du démarrage d'un processeur distant sans avoir à dialoguer avec celui-ci, c'est-à-dire à utiliser un réseau qui est en train de s'initialiser. Ce problème peut arriver au démarrage lorsque tous les processeurs du réseau ne sont pas synchrones et peuvent aussi être en panne. Localement, il n'est donc pas possible de connaître l'état global de l'environnement car il n'y a aucune assurance que les translations mémoires soient toutes programmées et que les processeurs soient démarrés et sains. À cela s'ajoute le fait que lorsqu'une communication est lancée sur un réseau partiellement ou non initialisé, des erreurs arrivent sur l'émetteur. Il est impossible pour l'émetteur de distinguer si elles sont normales (dues à l'initialisation non complète) ou réelles (problèmes de bus). Ce point empêche ainsi toute testabilité du réseau au démarrage.

En outre, étant donné que les mécanismes de communication sont des translations d'adresse, il est nécessaire pour communiquer vers un processeur distant de connaître les adresses physiques en réception. Pour cela, dans certains cas, il est possible de réserver des adresses physiques, où seule la communication entrante arrivera. Cela impose toutefois de nombreuses contraintes sur l'utilisation de la mémoire (sous-utilisation de la mémoire).

Enfin, pour effectuer un test du réseau au démarrage, il est nécessaire que tous ses composants soient mis en place. Toutefois, afin de connaitre un état d'initialisation du réseau, il est nécessaire de communiquer vers l'ensemble des nœuds du réseau. Or, cela n'est pas possible dans un réseau commuté de type PCIe, sans installer les translations d'adresses. Il est donc impossible à un nœud local de connaître la santé du réseau global à l'initialisation.

Pour remédier à ces problématiques tout en gardant les performances du réseau commuté de type PCIe, l'état de la technique propose de rendre statique l'ensemble des données de paramétrage nécessaires à l'initialisation d'un tel réseau. En particulier, pour cela, il est nécessaire de mettre en œuvre une réservation statique de toutes les zones de communication sur tous les nœuds et une programmation statique de toutes les translations d'adresse.

Toutefois, cette solution rend rigide la configuration du réseau et ne permet d'apporter aucune modification lors de son utilisation. Par exemple, en cas de changement de l'usage du réseau (redimensionnement, ajout et/ou retrait de nouveaux éléments), toutes les configurations sont à reprendre (réservation d'adresses physiques, translations d'adresse). Ainsi, pour prévoir une possibilité de modification sans devoir à refaire les configurations, les zones de communication sont généralement surdimensionnées ce qui implique une sous-utilisation des ressources.

La présente invention a pour but de remédier à l'ensemble des problématiques précitées et de proposer un système de communication permettant de mettre en œuvre un réseau de communication de haute performance, tel qu'un réseau de type PCIe, sans devoir rendre ce réseau statique et/ou sur-dimensionner ses différents composants.

À cet effet, l'invention a pour objet un système de communication comprend une pluralité de processeurs et au moins un commutateur, dit commutateur principal, raccordant les processeurs en un réseau de communication principal.

Le système est caractérisé en ce qu'il comprend en outre au moins un autre commutateur, dit commutateur auxiliaire, raccordant les processeurs en un réseau de communication auxiliaire, et en ce que le réseau de communication auxiliaire est destiné à être utilisé par les processeurs pour initialiser le réseau de communication principal.

Suivant d'autres aspects avantageux de l'invention, le système comprend une ou plusieurs des caractéristiques suivantes, prise(s) isolément ou suivant toutes les combinaisons techniquement possibles :
- le réseau de communication principal présente un débit supérieur à celui du réseau de communication auxiliaire ;
- le réseau de communication principal est un réseau commuté de type PCIe ;
- le réseau de communication auxiliaire est conforme à un protocole d'échange de données de type ETHERNET,
- comprenant au moins deux commutateurs principaux connectées entre eux, les processeurs connectés à un même commutateur principal formant un même domaine de communication ;
- dès l'établissement du réseau auxiliaire, chaque processeur est configuré pour envoyer dans ce réseau auxiliaire un message de broadcast comprenant au moins un élément choisi dans le groupe :
   - adresse physique du processeur et adresse de début de sa zone de communication ;
   - identifiant unique du processeur ;
- au moins un processeur, dit processeur maitre, est configuré pour générer une synthèse des messages de broadcast reçus et pour envoyer cette synthèse à tous les autres processeurs ;
- chaque processeur est configuré pour programmer l'ensemble de ses translations locales vers les adresses distantes à partir de la synthèse reçue ;
- chaque processeur d'un même domaine de communication est configuré pour déterminer un processeur de management parmi l'ensemble des processeurs de ce domaine de communication ;
- le processeur de management étant configuré pour déterminer une configuration de routage du commutateur principal du domaine de communication correspondant à partir de la synthèse reçue ;
- le processeur de management est déterminé par une analyse des identifiants de l'ensemble des processeurs du domaine de communication correspondant.

L'invention a également pour objet un procédé de communication dans le système de communication tel que décrit précédemment, comprenant l'initialisation du réseau de communication principal en utilisant le réseau de communication auxiliaire.

Ces caractéristiques et avantages de l'invention apparaitront à la lecture de la description qui va suivre, donnée uniquement à titre d'exemple non limitatif, et faite en référence aux dessins annexés, sur lesquels :
- [Fig 1] la figure 1 est une vue schématique d'un système de communication mettant en œuvre un réseau commuté de type PCIe, selon l'état de la technique ;
- [Fig 2] la figure 2 est une vue schématique d'un système de communication selon l'invention ; et
- [Fig 3] la figure 3 est un organigramme d'un procédé de communication selon l'invention, le procédé étant mis en œuvre par le système de communication de la figure 2.

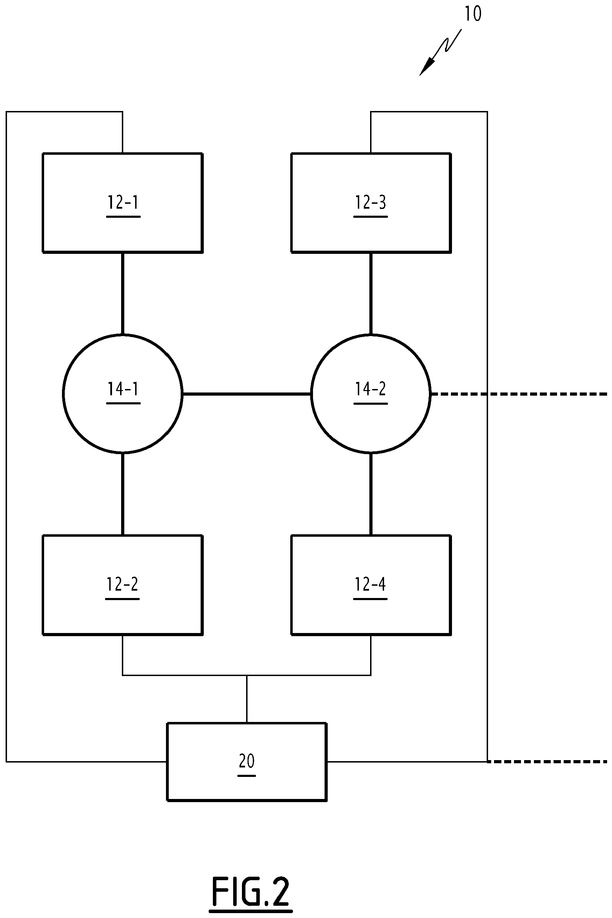

On a en effet représenté sur la figure 2 un système de communication 10 selon l'invention. Le système de communication 10 présente par exemple un ou plusieurs systèmes embarqués, notamment un ou plusieurs systèmes avioniques.

Le système de communication 10 comprend une pluralité de processeurs 12-1, ..., 12-N et un ou plusieurs commutateurs principaux 14-1, .., 14-M raccordant ces processeurs 12-1, ..., 12-N en un réseau de communication principal.

Chaque processeur 12-1, ..., 12-N, appelé également nœud ou nœud de calcul ou calculateur, présente un processeur connu en soi et utilisable notamment dans le domaine avionique. Dans l'exemple de la figure 2, quatre processeurs 12-1 à 12-4 sont illustrés.

Les commutateurs principaux 14-1, ..., 14-M raccordent les processeurs entre eux en formant ainsi un réseau commuté, en utilisant des moyens de raccordement adaptés. Ces moyens de raccordement présentent notamment des bus de communication connus en soi. Chaque commutateur 14-1, ..., 14-M est ainsi implémenté conformément au protocole de transmission utilisable dans le réseau commuté par les moyens de raccordement correspondants. Dans l'exemple de la figure 2, deux commutateurs 14-1 et 14-2 raccordés entre eux sont illustrés. Dans le même exemple, le commutateur 14-1 est raccordé directement aux processeurs 12-1 et 12-2 et le commutateur 14-2 est raccordé directement aux processeurs 12-3 et 12-4.

En fonction de la manière d'interconnexion des processeurs 12-1, ..., 12-N avec les commutateurs 14-1, ..., 14-M, le système de communication 10 forme un ou plusieurs domaines de communication. En particulier, les processeurs 12-1, ..., 12-N connectés à un même commutateur principal 14-1, ..., 14-M forment un même domaine de communication. Ainsi, dans l'exemple de la figure 2, les processeurs 12-1 et 12-2 avec le commutateur 14-1 forment un domaine de communication et les processeurs 12-3 et 12-4 avec le commutateur 14-2 forment un autre domaine de communication.

Le réseau de communication principal formé par les commutateurs principaux 14-1, .., 14-M est par exemple un réseau de haute performance (haut débit), tel qu'un réseau de type PCIe, appelé également PCI Express. En particulier, par l'expression « réseau de type PCIe », on entend un réseau utilisant des bus de communication PCIe de toute version existante et de toute version future dont les spécificités techniques sont compatibles avec celles décrites dans le présent document.

Selon l'invention, outre les commutateurs principaux 14-1, ..., 14-M formant le réseau principal, le système de communication 10 comprend au moins un commutateur auxiliaire 20 raccordant les processeurs 12-1, ..., 12-N en un réseau de communication auxiliaire, distinct du réseau de communication principal.

Ce réseau de communication auxiliaire permet d'initialiser le réseau de communication principal et présente à cet effet des facilités d'initialisation simplifiées par rapport à celles du réseau de communication principal. Par exemple, le réseau de communication auxiliaire permet une initialisation automatique de chacun des processeurs 12-1, ..., 12-N dans le réseau de communication auxiliaire.

En outre, le réseau de communication auxiliaire présente des performances, comme par exemple le débit de communication, inférieures à celles du réseau de communication principal. Ce réseau de communication auxiliaire est par exemple conçu pour uniquement initialiser le réseau de communication principal et n'est pas utilisable lors d'un fonctionnement nominal du système de communication 20.

Selon un exemple de réalisation, le réseau de communication auxiliaire est un réseau commuté de type ETHERNET. En particulier, par l'expression « réseau de type ETHERNET », on entend un réseau utilisant le protocole ETHERNET de toute version existante et de toute version future dont les spécificités techniques sont compatibles avec celles décrites dans le présent document.

D'autres exemples de choix respectifs des types du réseau de communication principal et du réseau de communication auxiliaire sont possibles.

Dans l'exemple de la figure 2, un seul commutateur auxiliaire 20 est illustré. Toutefois, le nombre de commutateurs utilisés est choisi en fonction du protocole et de la topologie du réseau de communication auxiliaire.

Le ou chaque commutateur auxiliaire 20 est implémenté selon le protocole de communication qu'il met en œuvre.

En outre, avantageusement selon l'invention, le ou chaque commutateur auxiliaire 20 est raccordé aux processeurs 12-1, ..., 12-N par des moyens de raccordement distincts de ceux des commutateurs principaux 14-1, ..., 14-M. Ces moyens de raccordement peuvent être filaires et/ou sans fil.

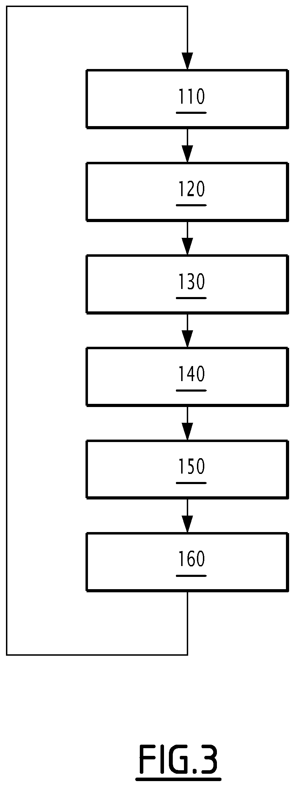

Le procédé de communication mis en oeuvre par le système de communication 10 sera désormais expliqué en référence à la figure 3 présentant un organigramme de ses étapes.

Selon l'invention, ce procédé est mis en oeuvre pour initialiser le réseau de communication principal en utilisant le réseau de communication auxiliaire. Une telle initialisation est par exemple mise en oeuvre lors d'un premier démarrage du système de communication 10 ou lors d'un changement de ce système de communication 10 impliquant des modifications structurelles. Par exemple, un tel changement peut comprendre un rajout et/ou un retrait d'un processeur dans le système 10.

Il est considéré en outre qu'au moment de la mise en oeuvre du procédé de communication, le réseau de communication auxiliaire est déjà initialisé, par exemple automatiquement, selon des techniques connues en soi.

Lors d'une étape 110 initiale, chaque processeur 12-1, ..., 12-N effectue une programmation locale interne. En particulier, lors de cette étape, la pile de communication de chaque processeur 12-1, ..., 12-N alloue exactement la quantité de mémoire physique contiguë nécessaire par rapport aux applications hébergées et programme un port d'accès au commutateur principal correspondant 14-1, ..., 14-M.

Lors d'une étape 120 suivante, chaque processeur 12-1, ..., 12-N envoie dans le réseau auxiliaire un message de broadcast comprenant au moins un élément choisi dans le groupe :
- son adresse physique et adresse de début de sa zone de communication ;
- son identifiant unique.

Lors d'une étape 130 suivante, les processeurs 12-1, ..., 12-N reçoivent par le réseau auxiliaire les messages de broadcast émis par les autres processeurs 12-1, ..., 12-N et parmi l'ensemble des processeurs 12-1, ..., 12-N, un processeur, dit processeur maitre, génère une synthèse des messages de broadcast reçus. Une telle synthèse présente par exemple une concaténation de tous les messages de broadcast reçus.

Le processeur maitre présente par exemple le processeur le plus rapide ayant reçu les messages de broadcast dans une période temporelle prédéterminé et ayant fait une synthèse correspondante.

Puis, le processeur maitre envoie cette synthèse à l'ensemble des autres processeurs qui renvoient un accusé de réception vers le processeur maitre.

Lors d'une étape 140 suivante, le processeur maitre met en œuvre une installation du réseau.

En particulier, lors de cette étape, le processeur maitre envoie à chacun des autres processeurs un message d'installation locale.

À la réception d'un tel message, chaque processeur programme les translations d'adresse locales vers les adresses distantes. Ces adresses distantes sont déterminées par chacun des processeurs 12-1, ..., 12-N à partir de la synthèse reçue, en appliquant un même algorithme. Par exemple, selon un tel algorithme, les adresses distantes sont liées à l'identifiant unique du processeur correspondant et à la taille de sa zone de communication. Ainsi, les adresses distantes peuvent être fixées.

Lors de la même étape 140, le processeur maitre envoie en outre des messages d'installation des translations inter-commutateur.

À la réception d'un tel message, les processeurs 12-1, ..., 12-N d'un même domaine de communication déterminent un processeur de management parmi l'ensemble des processeurs de ce domaine de communication. Ce choix peut être effectué par exemple par un algorithme prédéterminé, basé par exemple également sur les identifiants des processeurs 12-1, ..., 12-N.

Puis, dans chaque domaine de communication, le processeur de management programme toutes les communications inter-commutateur de ce domaine de communication. En particulier, le processeur de management détermine une configuration de routage du commutateur principal du domaine de communication correspondant à partir de la synthèse reçue.

À la fin de cette étape, chaque processeur 12-1, ..., 12-N envoie au processeur maitre un message de confirmation d'installation.

Lors d'une étape suivante 150, le processeur maitre attend la réception de l'ensemble des messages de confirmation d'installation et envoie à tous les processeurs 12-1, ..., 12-N un message de fin d'installation.

Lors d'une étape suivante 160, une diagnostique du réseau de communication principal est lancée. Lorsque cette diagnostique est positive, le réseau de communication principal peut alors être utilisé selon son fonctionnement nominal. Dans le cas contraire, au moins certaines étapes précitées peuvent être répétées en utilisant le réseau de communication auxiliaire.

On conçoit alors que la présente invention présente un certain nombre d'avantages.

En effet, l'invention permet d'initialiser un réseau de communication principal de haute performance, tel qu'un réseau commuté de type PCIe, en utilisant un autre réseau dont l'initialisation est plus simple, voire automatique.

Le réseau de communication principal peut utiliser ainsi une configuration dynamique adaptable à des différents changements susceptibles d'intervenir au cours du fonctionnement du système 10. Cela permet également d'éviter un surdimensionnement du réseau car seules les paramétrages nécessaires à sa configuration réelle sont effectués.

## Revendications

1. Système de communication (10) comprenant une pluralité de processeurs (12-1, ..., 12-N) et au moins un commutateur (14-1, ..., 14-M), dit commutateur principal, raccordant les processeurs (12-1, ..., 12-N) en un réseau de communication principal ;
le système (10) étant **caractérisé en ce qu'**il comprend en outre au moins un autre commutateur (20), dit commutateur auxiliaire, raccordant les processeurs (12-1, ..., 12-N) en un réseau de communication auxiliaire, et **en ce que** le réseau de communication auxiliaire est destiné à être utilisé par les processeurs (12-1, ..., 12-N) pour initialiser le réseau de communication principal ;
et **en ce que** dès l'établissement du réseau auxiliaire, chaque processeur (12-1, ..., 12-N) est configuré pour envoyer dans ce réseau auxiliaire un message de broadcast comprenant au moins un élément choisi dans le groupe :
- adresse physique du processeur (12-1, ..., 12-N) et adresse de début de sa zone de communication ;
- identifiant unique du processeur (12-1, ..., 12-N).

2. Système de communication (10) selon la revendication 1, dans lequel le réseau de communication principal présente un débit supérieur à celui du réseau de communication auxiliaire.

3. Système de communication (10) selon la revendication 1 ou 2, dans lequel le réseau de communication principal est un réseau commuté de type PCIe.

4. Système de communication (10) selon l'une quelconque des revendications précédentes, dans lequel le réseau de communication auxiliaire est conforme à un protocole d'échange de données de type ETHERNET.

5. Système de communication (10) selon l'une quelconque des revendications précédentes, comprenant au moins deux commutateurs principaux (14-1, ..., 14-M) connectées entre eux, les processeurs (12-1, ..., 12-N) connectés à un même commutateur principal (14-1, ..., 14-M) formant un même domaine de communication.

6. Système de communication (10) selon l'une quelconque des revendications précédentes, dans lequel, au moins un processeur (12-1, ..., 12-N), dit processeur maitre, est configuré pour générer une synthèse des messages de broadcast reçus et pour envoyer cette synthèse à tous les autres processeurs (12-1, ..., 12-N).

7. Système de communication (10) selon la revendication 6, dans lequel chaque processeur (12-1, ..., 12-N) est configuré pour programmer l'ensemble de ses translations locales vers les adresses distantes à partir de la synthèse reçue.

8. Système de communication (10) selon la revendication 6 ou 7 prise en combinaison avec la revendication 5, dans lequel chaque processeur (12-1, ..., 12-N) d'un même domaine de communication est configuré pour déterminer un processeur de management parmi l'ensemble des processeurs (12-1, ..., 12-N) de ce domaine de communication ;
le processeur de management étant configuré pour déterminer une configuration de routage du commutateur principal (14-1, ..., 14-M) du domaine de communication correspondant à partir de la synthèse reçue.

9. Système de communication (10) selon la revendication 8, dans lequel le processeur de management est déterminé par une analyse des identifiants de l'ensemble des processeurs (12-1, ..., 12-N) du domaine de communication correspondant.

10. Procédé de communication dans le système de communication (10) selon l'une quelconque des revendications précédentes, comprenant l'initialisation du réseau de communication principal en utilisant le réseau de communication auxiliaire.
